# EUROPÄISCHE PATENTSCHRIFT

(11) **EP 4 043 706 B1**
(45) Veröffentlichungstag und Bekanntmachung des Hinweises auf die Patenterteilung: **17.07.2024**
(21) Anmeldenummer: 22150108.3
(22) Anmeldetag: 04.01.2022
(51) Int. Cl.: F01N 3/20

(54) **ABGASBEHANDLUNGSANORDNUNG FÜR EINE ABGASANLAGE EINER BRENNKRAFTMASCHINE**
EXHAUST GAS TREATMENT ASSEMBLY FOR AN EXHAUST GAS SYSTEM OF A COMBUSTION ENGINE
DISPOSITIF DE TRAITEMENT DES GAZ D'ÉCHAPPEMENT POUR UN SYSTÈME D'ÉCHAPPEMENT DES GAZ D'UN MOTEUR À COMBUSTION INTERNE

(30) Priorität: 10.02.2021 DE 102021103060
(43) Veröffentlichungstag der Anmeldung: 17.08.2022
(73) Patentinhaber: Purem GmbH, 66539 Neunkirchen (DE)
(72) Erfinder: Datz, Wolfgang, Tübingen (DE); Wieland, Arthur, Baltmannsweiler (DE); Kappes, Konstantin, Stuttgart (DE)
(74) Vertreter: Ruttensperger Lachnit Trossin Gomoll

(56) Entgegenhaltungen:
- WO-A1-2004/090295
- DE-A1- 102019 203 938
- JP-A- 2017 504 751
- US-A1- 2015 089 931

## Beschreibung

Die vorliegende Erfindung betrifft eine Abgasbehandlungsanordnung, welche in einer Abgasanlage einer Brennkraftmaschine, insbesondere in einem Fahrzeug, dazu genutzt werden kann, das von einer Brennkraftmaschine ausgestoßene Abgas einem Abgasreinigungsprozess zu unterziehen.

Zur Verringerung des Schadstoffanteils in dem von einer Brennkraftmaschine ausgestoßenen Abgas ist es bekannt, verschiedene Abgasbehandlungseinheiten, wie zum Beispiel Katalysatoren und Partikelfilter, einzusetzen. Beispielsweise ist es Verbindung mit Diesel-Brennkraftmaschinen bekannt, zum Verringern des Stickoxidanteils im Abgas SCR-Katalysatoren einzusetzen.

Bei einer aus der JP 2017 504751 A bekannten Abgasbehandlungsanordnung wird der von einer Brennkraftmaschine ausgestoßene Abgasstrom stromabwärts eines Oxidationskatalysators und eines Partikelfilters in zwei Abgasströmungswege aufgeteilt. In einem als Heizleitung für einen ein Reaktionsmittel enthaltenden Tank wirksamen ersten Abgasströmungsweg der beiden Abgasströmungswege ist ein Ventil angeordnet, durch welches der Strom von Abgas durch den ersten Abgasströmungsweg hindurch regulierbar ist. Das in diesem Abgasströmungsweg strömende Abgas umströmt den das Reaktionsmittel enthaltenden Tank und wird im Bereich einer Mischkammer stromaufwärts einer SCR-Katalysatoranordnung mit dem zweiten der beiden Abgasströmungswege zusammengeführt.

Eine Abgasbehandlungsanordnung gemäß dem Oberbegriff des Anspruchs 1 ist aus der DE 10 2019 203 938 A1 bekannt. Bei dieser Abgasbehandlungsanordnung sind in einem SCR-Katalysatorblock mehrere zueinander parallele, miteinander aber nicht in Verbindung stehende Unterkanäle ausgebildet, durch welche das von einer Brennkraftmaschine ausgestoßene Abgas hindurch geleitet wird. Ein veränderbarer Anteil der Unterkanäle nimmt Abgas auf, welches mit einem stromaufwärts eingespritzten Reaktionsmittel durchsetzt ist, um darin eine selektive katalytische Reduktion durchzuführen. Durch den verbleibenden Anteil der Unterkanäle wird nicht mit Reaktionsmittel durchsetztes Abgas hindurchgeleitet und vollständig oder zum Teil in den Verbrennungsprozess zurückgespeist.

Es ist die Aufgabe der vorliegenden Erfindung, eine Abgasbehandlungsanordnung für eine Abgasanlage einer Brennkraftmaschine vorzusehen, welche bei kompaktem Aufbau verbessert an verschiedene Betriebszustände anpassbar ist.

Erfindungsgemäß wird diese Aufgabe gelöst eine Abgasbehandlungsanordnung für eine Abgasanlage einer Brennkraftmaschine gemäß Anspruch 1. Diese Abgasbehandlungsanordnung umfasst:
- einen von einem an einem Gehäuse vorgesehenen Abgaseinlass zu einem an dem Gehäuse vorgesehenen Abgasauslass führenden ersten Abgasström ungsweg,
- einen von dem Abgaseinlass zu dem Abgasauslass führenden, vom ersten Abgasströmungsweg getrennten zweiten Abgasströmungsweg,
- eine Strömungsweg-Umschalteinheit zum Verändern von in den ersten Abgasströmungsweg und den zweiten Abgasströmungsweg geleiteten Abgasstromanteilen eines den Abgaseinlass durchströmenden Abgasstroms
- eine Reaktionsmittelabgabeanordnung zum Abgeben von Reaktionsmittel in den zweiten Abgasströmungsweg stromabwärts des Abgaseinlasses,
- eine SCR-Katalysatoranordnung im zweiten Abgasströmungsweg stromaufwärts des Abgasauslasses.

Für eine definierte Positionierung der verschiedenen Systembereiche der Abgasbehandlungsanordnung einerseits und für eine definierte Strömungsführung im Gehäuse andererseits ist ein Gehäuseinnenraum durch eine Trennwand in einen ersten Volumenbereich und einen zweiten Volumenbereich unterteilt, und der zweite Volumenbereich kann wenigstens einen Teil des ersten Abgasströmungswegs bilden. Dies bedeutet, dass der zweite Volumenbereich direkt von Abgas durchströmt wird und somit den zweiten Volumenbereich umgrenzende Wandungen, wie zum Beispiel die Trennwand, auch den den zweiten Volumenbereich durchströmenden Abgasstrom führende Wandungen sind.

Durch das wahlweise Umschalten zwischen den beiden Abgasströmungswegen, d.h. das Verändern der durch die beiden Abgasströmungswege geleiteten Anteile des im Bereich des Abgaseinlasses in die Abgasbehandlungsanordnung eintretenden Abgasstroms, besteht die Möglichkeit, den Abgasstrom im Wesentlichen vollständig oder teilweise durch die SCR-Katalysatoranordnung zu leiten oder im Wesentlichen vollständig oder teilweise durch den ersten Abgasströmungsweg und somit an der SCR-Katalysatoranordnung vorbei zu leiten. Die SCR-Katalysatoranordnung wird somit nur dann und in derartigem Ausmaß durchströmt, wie dies durch einen jeweiligen Betriebszustand bzw. Schadstoffanteil im Abgas erforderlich bzw. sinnvoll ist. Ist eine Behandlung des Abgases in der SCR-Katalysatoranordnung nicht erforderlich bzw. liegt ein derartiger Betriebszustand vor, in welchem die SCR-Katalysatoranordnung beispielsweise aufgrund der Abgaszusammensetzung oder einer zu niedrigen Temperatur nur eine geringe Wirksamkeit entfalten kann, kann der Abgasstrom an der SCR-Katalysatoranordnung vorbei geleitet werden, so dass in der Abgasbehandlungsanordnung ein Zustand mit deutlich geringerem Strömungswiderstand erreicht wird, was zur Verringerung des Brennstoffverbrauchs in einer Brennkraftmaschine und somit auch zur Verringerung des Schadstoffausstoßes beiträgt.

Um bei der vorangehend angeführten Einstellbarkeit des durch die SCR-Katalysatoranordnung geleiteten Anteils des Abgasstroms am Abgasauslass einen vereinigten Abgasstrom bereitstellen zu können, wird vorgeschlagen, dass in einem Strömungsweg-Zusammenführbereich stromaufwärts des Abgasauslasses der erste Abgasströmungsweg und der zweite Abgasströmungsweg zusammengeführt sind, und dass die SCR-Katalysatoranordnung im zweiten Abgasströmungsweg stromaufwärts des Strömungsweg-Zusammenführbereichs angeordnet ist.

Bei einer einfach zu realisierenden Ausgestaltung kann die Auftrennung in die die beiden Abgasströmungswege durchströmenden Anteile des am Abgaseinlass eintretenden Abgasstroms beispielsweise dadurch erfolgen, dass in einem Strömungsweg-Trennbereich stromabwärts des Abgaseinlasses der erste Abgasströmungsweg und der zweite Abgasströmungsweg voneinander aufgetrennt sind, und dass die Strömungsweg-Umschalteinheit stromabwärts des Strömungsweg-Trennbereichs im ersten Abgasströmungsweg angeordnet ist.

Die Strömungsweg-Umschalteinheit kann eine Drosselklappe umfassen, wobei die Drosselklappe in einer Schließstellung den ersten Abgasströmungsweg gegen Durchströmung maximal, vorzugsweise im Wesentlichen vollständig, absperrt und in einer Offenstellung den ersten Abgasströmungsweg zur Durchströmung maximal freigibt. Derartige Drosselklappen für Abgasanlagen sind im Stand der Technik als betriebssichere und einfach anzusteuernde Systembereiche bekannt und ermöglichen auch im Kontext der erfindungsgemäßen Ausgestaltung einer Abgasbehandlungsanordnung in einfacher Weise das Aufteilen bzw. Umschalten des Abgasstroms.

Um bei derartiger Ausgestaltung bzw. Positionierung der Strömungsweg-Umschalteinheit dafür zu sorgen, dass bei freigegebenem, insbesondere maximal freigegebenem erstem Abgasströmungsweg im Wesentlichen der gesamte Abgasstrom durch diesen ersten Abgasströmungsweg hindurch geleitet wird, wird weiter vorgeschlagen, dass ein Strömungswiderstand des ersten Abgasströmungswegs kleiner ist als ein Strömungswiderstand des zweiten Abgasströmungswegs. Ist die Strömungsweg-Umschalteinheit in einem Zustand, in welchem der erste Abgasströmungsweg maximal freigegeben ist, wird allein aufgrund des größeren Strömungswiderstandes im zweiten Abgasströmungsweg das Abgas primär durch den ersten Abgasströmungsweg hindurchströmen. Durch Verstellung der Strömungsweg-Umschalteinheit in Richtung zu einer Schließstellung derselben kann die durch die Strömungsweg-Umschalteinheit eingeführte Verdämmung und somit der Strömungswiderstand im ersten Abgasströmungsweg erhöht werden, so dass entsprechend des Verhältnisses der Strömungswiderstände in den beiden Abgasströmungswegen eine entsprechende Aufteilung des Abgasstroms auf die beiden Abgasströmungswege erreicht werden kann.

Bei einer besonders vorteilhaften Ausgestaltungsvariante wird vorgeschlagen, dass die SCR-Katalysatoranordnung im Wesentlichen im zweiten Volumenbereich angeordnet ist. Dies ist insbesondere dann von Vorteil, wenn der zweite Volumenbereich einen Teil des ersten Abgasströmungswegs bereitstellt und somit von im ersten Abgasströmungsweg strömendem Abgas durchströmt wird. Dieses Abgas umströmt dann auch die SCR-Katalysatoranordnung in ihrem im zweiten Volumenbereich liegenden Abschnitt, so dass durch das Abgas Wärme auf die SCR-Katalysatoranordnung übertragen wird und diese im Betrieb einer Brennkraftmaschine ständig auf einer für die Durchführung einer katalytischen Abgasreinigungsreaktion geeigneten Temperatur gehalten wird bzw. am Beginn des Verbrennungsbetriebs einer Brennkraftmaschine schnell auf eine derartige Temperatur gebracht werden kann.

Um den zweiten Volumenbereich für die Durchströmung mit Abgas nutzen zu können, kann der erste Abgasströmungsweg ein zu dem zweiten Volumenbereich offenes, vorzugsweise rohrartiges erstes Abgasführungselement umfassen.

Zum Bereitstellen eines möglichst geringen Strömungswiderstands des ersten Abgasströmungswegs wird vorgeschlagen, dass ein von dem Abgaseinlass zu dem zweiten Volumenbereich führender Abschnitt des ersten Abgasströmungswegs von Abgas im Wesentlichen geradlinig durchströmbar ist. Somit kann das in den ersten Abgasströmungsweg eingeleitete Abgas im Wesentlichen ohne Strömungsumlenkung durch diesen Abschnitt des ersten Abgasströmungswegs hindurch geleitet werden und in den zweiten Volumenbereich eintreten.

Die Drosselklappe kann in dem ersten Abgasführungselement angeordnet sein, so dass das erste Abgasführungselement ein Klappenrohr der Drosselklappe bereitstellen kann.

Für eine kompakte Ausgestaltung der Abgasbehandlungsanordnung kann der zweite Abgasströmungsweg umfassen:
- ein im Wesentlichen in dem ersten Volumenbereich angeordnetes, vorzugsweise gehäuseartiges zweites Abgasführungselement,
- eine an das zweite Abgasführungselement anschließende Abgas/Reaktionsmittel-Mischstrecke mit einem im Wesentlichen in einem an das zweite Abgasführungselement anschließenden, vorzugsweise rohrartigen dritten Abgasführungselement angeordneten Mischer,
- ein an das dritte Abgasführungselement anschließendes, sich im Wesentlichen in dem zweiten Volumenbereich erstreckendes, vorzugsweise rohrartiges viertes Abgasführungselement,
- ein an das vierte Abgasführungselement anschließendes, sich im Wesentlichen in dem ersten Volumenbereich erstreckendes, vorzugsweise gehäuseartiges fünftes Abgasführungselement,
- ein an das fünfte Abgasführungselement anschließendes, sich im Wesentlichen in dem zweiten Volumenbereich erstreckendes, vorzugsweise rohrartiges, ein Katalysatorelement der SCR-Katalysatoranordnung aufnehmendes sechstes Abgasführungselement.

Dabei ist darauf hinzuweisen, dass eines oder mehrere der Abgasführungselemente jeweils aus einem Teil bzw. einem Stück aufgebaut sein können, was vor allem bei rohrartiger Ausgestaltung eines jeweiligen Abgasführungselements für einen einfach zu realisierenden Aufbaus sorgt. Alternativ ist es möglich, dass eines oder mehrere der Abgasführungselemente jeweils aus mehreren Teilen zusammengesetzt sind, was vor allem bei gehäuseartiger Ausgestaltung eines jeweiligen Abgasführungselements vorteilhaft ist. Beispielsweise kann ein derartiges Abgasführungselement dann mit zwei oder mehreren miteinander verbundenen Gehäuseschalen aufgebaut sein. Weiter können beispielsweise zwei oder mehrere aneinander anschließende Abgasführungselement insbesondere bei rohrartiger Ausgestaltung derselben durch ein einziges Bauteil bereitgestellt sein, in welchem die jeweiligen Abgasführungselemente verschiedene Bauteilabschnitte bereitstellen.

Bei der erfindungsgemäßen Abgasbehandlungsanordnung kann für einen kompakten Aufbau weiter vorgesehen sein, dass der Abgaseinlass an dem zweiten Abgasführungselement vorgesehen ist, oder/und dass das zweite Abgasführungselement in einem mit dem dritten Abgasführungselement verbundenen Verbindungsbereich an der Trennwand getragen ist, oder/und dass das dritte Abgasführungselement sich im Wesentlichen in dem zweiten Volumenbereich erstreckt, oder/und dass eine Abgas-Hauptströmungsrichtung in dem zweiten Abgasführungselement im Wesentlichen orthogonal zu einer Abgas-Hauptströmungsrichtung im Abgaseinlass ist.

Ferner wird ein kompakter Aufbau dadurch unterstützt, dass der zweite Abgasströmungsweg zu dem ersten Volumenbereich nicht offen ist, oder/und dass das zweite Abgasführungselement und das fünfte Abgasführungselement im ersten Volumenbereich nebeneinander angeordnet sind und eine Abgas-Hauptströmungsrichtung im zweiten Abgasführungselement näherungsweise parallel ist zu einer Abgas-Hauptströmungsrichtung im fünften Abgasführungselement. Es ist in diesem Zusammenhang darauf hinzuweisen, dass bei einer Ausgestaltung des zweiten Abgasströmungswegs derart, dass dieser zum ersten Volumenbereich nicht offen ist, der zweite Abgasströmungsweg beispielsweise durch verschiedene der vorangehend angeführten Abgasführungselemente durch den ersten Volumenbereich hindurch geführt ist, die den ersten Volumenbereich nach außen begrenzenden Wandungen jedoch nicht dazu dienen, den den zweiten Abgasströmungsweg durchströmenden Abgasstrom zu leiten.

Zum Anschließen des ersten Abgasströmungswegs an das zweite Abgasführungselement kann der erste Abgasströmungsweg ein an das zweite Abgasführungselement anschließendes und zu dem ersten Abgasführungselement führendes, vorzugsweise trichterartiges siebtes Abgasführungselement umfassen.

Das zweite Abgasführungselement kann eine erste Austrittsöffnung aufweisen, wobei das dritte Abgasführungselement an das zweite Abgasführungselement im Bereich der ersten Austrittsöffnung anschließt. Weiter kann das zweite Abgasführungselement eine zweite Austrittsöffnung aufweisen, wobei das siebte Abgasführungselement an das zweite Abgasführungselement im Bereich der zweiten Austrittsöffnung anschließt.

Zur Zusammenführung der Abgasströmungswege kann der Strömungsweg-Zusammenführbereich ein auf das sechste Abgasführungselement folgendes Abgasstrom-Zusammenführelement umfassen, und das Abgasstrom-Zusammenführelement kann über wenigstens eine, vorzugsweise eine Mehrzahl von Durchtrittsöffnungen zu dem zweiten Volumenbereich offen sein oder/und der Abgasauslass kann im Bereich des Abgasstrom-Zusammenführelements vorgesehen sein.

Die Erfindung betrifft ferner eine Abgasanlage für eine Brennkraftmaschine in einem Fahrzeug, umfassend eine erfindungsgemäß aufgebaute Abgasbehandlungsanordnung und ein an den Abgasauslass der Abgasbehandlungsanordnung anschließendes Abgasbehandlungssystem mit wenigstens einer Abgasbehandlungseinheit.

In einer derartigen Abgasanlage ist die erfindungsgemäß aufgebaute Abgasbehandlungsanordnung ein vorgeschalteter Systembereich, auf welchen ein weiterer zur Abgasbehandlung und somit zur Verringerung des Schadstoffanteils im Abgas beitragender Systembereich mit wenigstens einer Abgasbehandlungseinheit, wie zum Beispiel Katalysator oder Partikelfilter, folgt.

Die vorliegende Erfindung wird nachfolgend mit Bezug auf die beiliegenden Figuren detailliert beschrieben. Es zeigt:
- Fig. 1: eine perspektivische Ansicht einer Abgasbehandlungsanordnung in einer Abgasanlage einer Brennkraftmaschine, betrachtet in Blickrichtung I;
- Fig. 2: die Abgasbehandlungsanordnung der Fig. 1, betrachtet in Blickrichtung II;
- Fig. 3: eine weitere perspektivische Ansicht der Abgasbehandlungsanordnung mit geöffnet dargestelltem Gehäuse;
- Fig. 4: eine Längsschnittansicht der Abgasbehandlungsanordnung;
- Fig. 5: eine der Fig. 4 entsprechende Darstellung, geschnitten in einer anderen Schnittebene.

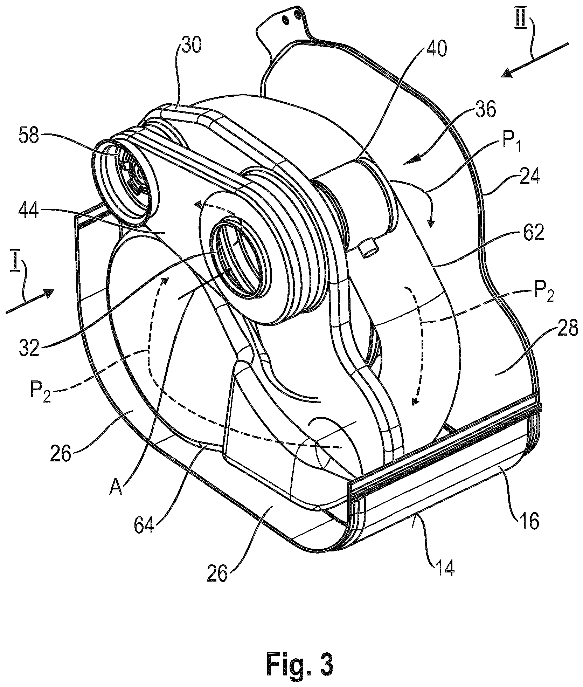

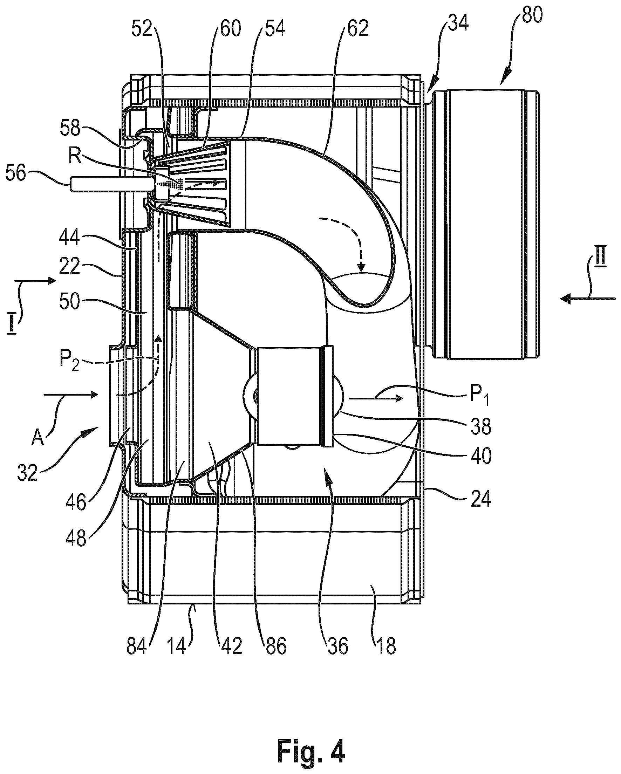

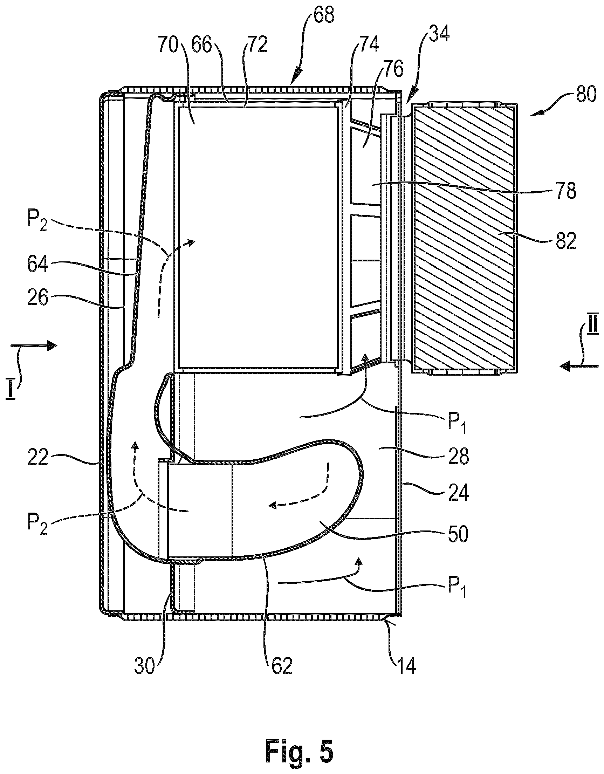

In den Figuren ist eine in einer Abgasanlage 10 einer Brennkraftmaschine anzuordnende Abgasbehandlungsanordnung allgemein mit 12 bezeichnet. Die Abgasbehandlungsanordnung 12 umfasst ein Gehäuse 14 mit einer im dargestellten Ausgestaltungsbeispiel mit zwei Gehäuseschalen 16, 18 aufgebauten Umfangswandung 20, einer in den Fig. 4 und 5 erkennbaren einlassseitigen Stirnwand 22, einer in den Fig. 3, 4 und 5 erkennbaren auslassseitigen Stirnwand 24 und einer einen Innenraum des Gehäuses 14 in einen stromaufwärtigen ersten Volumenbereich 26 und einem stromabwärtigen zweiten Volumenbereich 28 unterteilende Trennwand 30. Die beiden Gehäuseschalen 16, 18, die Stirnwände 22, 24 und die Trennwand 30 sind vorzugsweise mit Blechmaterial aufgebaut und in Bereichen, in welchen sie aneinander angrenzen, durch Materialschluss, wie z. B. Verschweißen oder Verlöten, oder/und durch Formschluss fest miteinander verbunden.

Im Inneren des Gehäuses 14 sind zwei nachfolgend erläuterte Abgasströmungswege zwischen einem Abgaseinlass 32 und einem Abgasauslass 34 definiert. Jeder der Abgasströmungswege ist von dem oder einem Teil des im Bereich des Abgaseinlasses 32 in das Gehäuse 14 eingeleiteten Abgasstroms A durchströmbar. Dabei ist in den Figuren der den ersten Abgasströmungsweg durchströmende Abgasstrom bzw. Teil des Abgasstroms durch mit durchgezogener Linie bezeichnete Strömungspfeile P₁ dargestellt, während der den zweiten Abgasströmungsweg durchströmende Abgasstrom bzw. Teil des Abgasstroms durch mit gestrichelter Linie dargestellte Strömungspfeile P₂ repräsentiert ist.

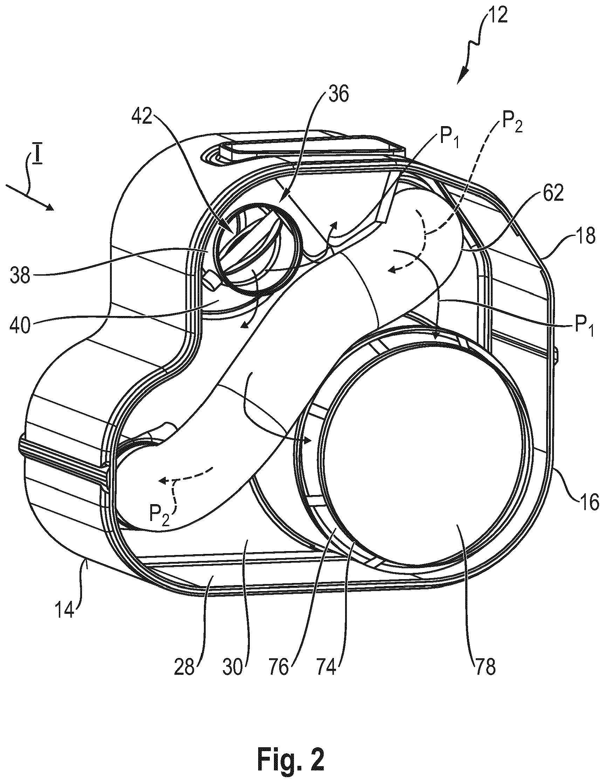

Die Abgasbehandlungsanordnung 12 umfasst zum Umschalten bzw. Aufteilen des Abgasstroms A zwischen den Abgasströmungswegen bzw. auf die beiden Abgasströmungswege eine allgemein mit 36 bezeichnete Strömungsweg-Umschalteinheit. Die Strömungsweg-Umschalteinheit 36 umfasst eine in Fig. 2 in einer Offenstellung dargestellte Drosselklappe 38 in einem rohrartigen ersten Abgasführungselement 40, welches ein Klappenrohr bereitstellt, an welchem die Drosselklappe 38 um eine Schwenkachse schwenkbar getragen ist. Der Drosselklappe 38 ist ein nicht dargestellter, beispielsweise elektromotorischer Schwenkantrieb zugeordnet, um diese zwischen der in Fig. 2 dargestellten Offenstellung, in welcher das erste Abgasführungselement 40 zur Durchströmung im Wesentlichen maximal freigegeben ist, und beispielsweise einer Schließstellung verschwenkbar ist, in welcher die Drosselklappe 38 das erste Abgasführungselement 40 gegen Durchströmung maximal, beispielsweise im Wesentlichen vollständig abschließt. In Zwischenstellungen zwischen der Offenstellung mit maximaler Durchströmbarkeit und der Schließstellung mit minimaler Durchströmbarkeit wird der durch das erste Strömungsführungselement 40 hindurch führende erste Abgasströmungsweg 42 durch das Drosselelement 38 teilweise, jedoch nicht vollständig gegen Durchströmung verdämmt.

Stromaufwärts des rohrartigen ersten Strömungsführungselements 40, welches im Wesentlichen vollständig im zweiten Volumenbereich 28 positioniert ist, ist im ersten Volumenbereich 26 ein beispielsweise mit zwei schalenartigen Gehäuseteilen aufgebautes, gehäuseartiges zweites Abgasführungselement 44 angeordnet. Das zweite Abgasführungselement 44 weist eine Einlassöffnung 46 auf, welche im Bereich es an der Stirnwand 22 ausgebildeten Abgaseinlasses 32 positioniert ist oder diesen bereitstellt, beispielsweise am an der Stirnwand 22 festlegt ist, so dass der den Abgaseinlass 32 durchströmende Abgasstrom im Bereich der Eintrittsöffnung 46 in das gehäuseartige zweite Abgasführungselement 44 eintritt.

In einem auf die Eintrittsöffnung 46 folgenden Volumenbereich des zweiten Abgasführungselements 44 ist ein Strömungsweg-Trennbereich 48 gebildet, in welchem der zu dem ersten Abgasführungselement 40 führende erste Abgasströmungsweg 42 und der durch das zweite Abgasführungselement 44 hindurch führende zweite Abgasströmungsweg 50 aufgetrennt werden.

Im Inneren des zweiten Abgasführungselements 46 strömt der Abgasstrom A bzw. der Teil des Abgasstroms A, welcher in den zweiten Abgasströmungsweg 50 eingeleitet wird, im Wesentlichen orthogonal zur Abgas-Hauptströmungsrichtung des Abgasstroms A am Abgaseinlass 32 und gelangt zu einer ersten Austrittsöffnung 52 des zweiten Abgasführungselements 46. Im Bereich der ersten Austrittsöffnung 52 schließt an das zweite Abgasführungselement 46 ein rohrartiges drittes Abgasführungselement 54 an, in welchem im Wesentlichen eine Mischstrecke zur Durchmischung des den zweiten Abgasströmungsweg 50 durchströmenden Teils des Abgasstroms A mit einem vermittels einer Reaktionsmittelabgabeanordnung 56, im Allgemeinen auch als Injektor bezeichnet, abgegebenen Reaktionsmittel R. Hierzu ist an einem auch die Reaktionsmittelabgabeanordnung 56 tragenden Träger 58 ein Mischer 60 getragen, welcher von Abgas und Reaktionsmittel R durchströmt wird und dabei eine die Durchmischung unterstützende Verwirbelung erzeugt.

Das Gemisch aus Abgas und Reaktionsmittel R, beispielsweise einer in Form eines Sprühnebels von der Reaktionsmittelabgabeanordnung 56 abgegebenen Harnstoff/Wasser-Lösung, strömt aus dem zusammen mit dem zweiten Abgasführungselement 46 an der Trennwand 30 getragenen und im Wesentlichen im zweiten Volumenbereich 28 sich erstreckenden dritten Abgasführungselement 54 in ein gekrümmtes, rohrartiges viertes Abgasführungselement 62. Dieses führt in einem Bogen durch den zweiten Volumenbereich 28 hindurch und schließt im Bereich der Trennwand 30 an ein gehäuseartiges fünftes Abgasführungselement 64 an. Auch das fünfte Abgasführungselement 64 kann mit zwei Gehäuseschalen aufgebaut sein und leitet, ebenso wie das zweite Abgasführungselement 44, den den zweiten Abgasströmungsweg 50 durchströmenden Teil des Abgasstroms A durch den ersten Volumenbereich 26 hindurch, wobei auch in diesem Bereich der zweite Abgasströmungsweg 50 nicht zum ersten Volumenbereich 26 offen ist.

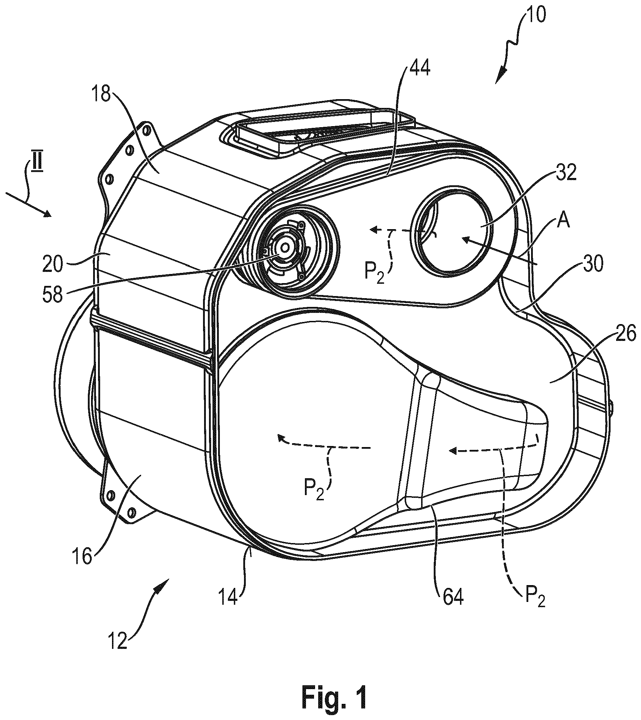

Die Fig. 1 zeigt deutlich, dass im ersten Volumenbereich 26 das gehäuseartige zweite Abgasführungselement 44 und das gehäuseartige fünfte Abgasführungselement 64 im Wesentlichen nebeneinander liegend positioniert sind und von dem entlang des zweiten Abgasströmungswegs 50 strömenden Teil des Abgasstroms A zueinander im Wesentlichen parallel durchströmt werden.

An das fünfte Abgasführungselement 64 schließt im Bereich der Trennwand 30 ein rohrartiges sechstes Abgasführungselement 66 an. Dieses ist mit dem fünften Abgasführungselement 64 beispielsweise im Bereich der Trennwand 30 verbunden und gemeinsam mit diesem an der Trennwand 30 fest getragen. Das sechste Abgasführungselement 66 kann einen Mantel einer allgemein mit 68 bezeichneten SCR-Katalysatoranordnung bilden. In dem rohrartigen sechsten Abgasführungselement 66 ist ein Katalysatorelement 70 der SCR-Katalysatoranordnung 68 beispielsweise unter Zwischenlagerung einer Fasermatte 72 getragen. Das Katalysatorelement 70 kann einen beispielsweise monolithisch aufgebauten, porösen, also von Abgas durchströmbaren Körper umfassen, der mit katalytisch wirksamem Material aufgebaut oder/und beschichtet ist. Alternativ könnte in das rohrartige sechste Abgasführungselement 66 eine vollständige Katalysatoranordnung mit Mantel und Katalysatorelement eingesetzt sein, so dass erforderlichenfalls die gesamte SCR-Katalysatoranordnung 68 aus dem sechsten Abgasführungselement 66 entfernt werden kann.

Das sechste Abgasführungselement 66 bzw. die dieses umfassende oder in dieses eingesetzte SCR-Katalysatoranordnung 68 liegt im Wesentlichen vollständig im zweiten Volumenbereich 28, so dass der über das erste Abgasführungselement 40 in den zweiten Volumenbereich 28 eintretende und diesen durchströmende Anteil des Abgasstroms A die SCR-Katalysatoranordnung 68 an deren Außenseite umströmen kann.

An das sechste Abgasführungselement 66 schließt ein rohrartiges, im dargestellten Ausgestaltungsbeispiel trichterartig ausgebildetes Abgasstrom-Zusammenführelement 74 an. In dieses Abgasstrom-Zusammenführelement 74 tritt der aus der SCR-Katalysatoranordnung 68 bzw. dem Katalysatorelement 70 austretende Abgasstrom ein. Das Abgasstrom-Zusammenführelement weist eine Mehrzahl von Durchtrittsöffnungen 76 auf, über welche der Innenraum des Abgasstrom-Zusammenführelements 74 zum zweiten Volumenbereich 28 offen ist, so dass den zweien Volumenbereich 28 durchströmendes Abgas über die Durchtrittsöffnungen 76 in das Abgasstrom-Zusammenführelement 74 eintreten kann.

In dem Abgasstrom-Zusammenführelement 76 ist ein Strömungsweg-Zusammenführbereich 78 gebildet, in welchem die beiden Abgasströmungswege 42, 50 wieder zusammengeführt sind und welcher zu dem im Bereich der Stirnwand 24 gebildeten Abgasauslass 34 führt oder diesen bereitstellt. Der am Abgasauslass 34 die Abgasbehandlungsanordnung 12 verlassende Abgasstrom A kann zu einem an den Abgasauslass 34 anschließenden weiteren Abgasbehandlungssystem 80 strömen, in welchem die bzw. eine weitere Behandlung des Abgases zur Verringerung des Schadstoffanteils durchgeführt werden kann. Beispielsweise kann dieses Abgasbehandlungssystem eine oder mehrere Abgasbehandlungseinheiten 82, wie z. B. einen Oxidationskatalysator, insbesondere Diesel-Oxidationskatalysator, einen Partikelfilter, insbesondere Dieselpartikelfilter, oder dergleichen, umfassen.

Zur Verbindung des zweiten Abgasführungselements 44 mit dem ersten Abgasführungselement 40 schließt an das zweite Abgasführungselement 44 im Bereich einer zweiten Austrittsöffnung 84 desselben ein im dargestellten Ausgestaltungsbeispiel trichterartig ausgebildetes siebtes Abgasführungselement 86 an, welches an seinem stromabwärtigen Ende an das erste Abgasführungselement 40 anschließt, so dass der Anteil des am Abgaseinlass 32 in die Abgasbehandlungsanordnung 12 eintretenden Abgasstroms A, welcher durch den ersten Abgasströmungsweg 42 geleitet wird, über das trichterartige siebte Abgasführungselement 86, das im Bereich der Trennwand 30 mit dieser bzw. auch dem zweiten Abgasführungselement 50 verbunden ist, zum ersten Abgasführungselement 40 strömen kann.

Es ist darauf hinzuweisen, dass auch die Verbindung der einzelnen aneinander anschließenden Abgasführungselemente, welche vorzugsweise alle aus Blechmaterial aufgebaut sind, durch Materialschluss, beispielsweise Verschweißen oder Verlöten, oder/und durch Formschluss, beispielsweise durch Umbördeln bzw. Einstecken der Abgasführungselemente ineinander erreicht werden kann. Jedes der Abgasführungselemente ist beispielsweise aus einem Teil aufgebaut, kann alternativ aber aus mehreren Teilen zusammengesetzt sein. Beispielsweise könnten auch das dritte Abgasführungselement 54 und das vierte Abgasführungselement 62 Bauteilabschnitte ein und desselben Bauteils bereitstellen.

Mit dem vorangehend beschriebenen Aufbau einer Abgasbehandlungsanordnung 12 wird es möglich, durch entsprechende Ansteuerung der Strömungsweg-Umschalteinheit 36 die Aufteilung des Abgasstroms A auf die beiden Abgasströmungswege 42, 50 definiert einzustellen. Soll beispielsweise der gesamte Abgasstrom A durch den zweiten Abgasströmungsweg 50 und somit die SCR-Katalysatoranordnung 68 geleitet werden, wird die Drosselklappe 38 in ihre Schließstellung gestellt, in welcher sie den ersten Abgasströmungsweg 42 im Bereich des ersten Abgasführungselements 40 im Wesentlichen vollständig gegen Durchströmung abschließt. Der Abgasstrom A wird dann im Strömungsweg-Trennbereich 48 im Wesentlichen vollständig in das zweite Abgasführungselement 44 eingeleitet und durch die im dritten Abgasführungselement 54 gebildete Mischstrecke hindurchgeleitet. In dieser Mischstrecke kann das Abgas mit Reaktionsmittel R durchsetzt werden und in dem dann folgenden vierten Abgasführungselement 62 zum fünften Abgasführungselement 64 und über dieses in das sechste Abgasführungselement 66 bzw. die SCR-Katalysatoranordnung 68 strömen.

Man erkennt, dass zwischen der im dritten Abgasführungselement 54 gebildeten bzw. begonnenen Mischstrecke und der SCR-Katalysatoranordnung 68 ein vergleichsweise langer Strömungsweg für das Gemisch aus Abgas und Reaktionsmittel R vorgesehen ist, in welchem dieses Gemisch mehrfach umgelenkt wird, was zwar zu einem erhöhten Strömungswiderstand führt, jedoch die Durchmischung von Abgas und Reaktionsmittel R unterstützt. Das die SCR-Katalysatoranordnung 68 durchströmende Abgas tritt in den im Abgasstrom-Zusammenführelement 74 gebildeten Strömungsweg-Zusammenführbereich 76 ein und verlässt über diesen und den Abgasauslass 34 die Abgasbehandlungsanordnung 12 zu dem dann folgenden Teil der Abgasanlage 10, beispielsweise dem weiteren Abgasbehandlungssystem 80. Da in diesem Betriebszustand der zweite Volumenbereich 68 vermittels der Drosselklappe 38 abgeschlossen ist, wird im Wesentlichen kein aus der SCR-Katalysatoranordnung 68 austretendes Abgas durch die Durchtrittsöffnungen 76 hindurch in den zweiten Volumenbereich 28 gelangen.

Soll der Abgasstrom A im Wesentlichen vollständig durch den ersten Abgasströmungsweg 42 geleitet werden, wird die Drosselklappe 38 in ihren in den Fig. 2 und 4 dargestellte Offenstellung gestellt. Das erste Abgasführungselement 40 ist in diesem Zustand maximal zur Durchströmung freigegeben, und der durch den Abgaseinlass 32 in das Gehäuses 14 eintretende Abgasstrom A wird im Wesentlichen vollständig geradlinig durch die Eintrittsöffnung 46 des zweiten Abgasführungselements 44 hindurch in das siebte Abgasführungselement 86, das erste Abgasführungselement 40 und den zweiten Volumenbereich 28 eintreten. Da die Eintrittsöffnung 46, das siebte Abgasführungselement 86 und das erste Abgasführungselement 40 in Strömungsrichtung im Wesentlichen geradlinig aufeinanderfolgend angeordnet sind, ist bei dieser Strömungsführung ein vergleichsweise geringer Strömungswiderstand für den Abgasstrom A bereitgestellt.

Das Abgas durchströmt, nachdem es aus dem ersten Abgasführungselement 40 ausgetreten ist, den zweiten Volumenbereich 28 und umströmt dabei sowohl das dritte Abgasführungselement 54, als auch das vierte Abgasführungselement 62, als auch das sechste Abgasführungselement 66 und damit die SCR-Katalysatoranordnung 68 an deren Außenseite. Dies führt dazu, dass das mit vergleichsweise hoher Temperatur in den zweiten Volumenbereich 28 eintretende Abgas diese dem zweiten Abgasströmungsweg 50 zugeordneten Komponenten bzw. Systembereiche erwärmt. Dies hat zur Folge, dass in dem Bereich der Einleitung des Reaktionsmittels R in den Abgasstrom bei Durchströmung des zweiten Abgasströmungswegs 50 die Verdampfung des Reaktionsmittels R unterstützt wird. Gleichzeitig wird durch Umströmung des sechsten Abgasführungselements 66 bzw. der SCR-Katalysatoranordnung 68 diese auch bzw. primär von außen erwärmt und somit schnell auf eine für die Durchführung der katalytischen Reaktion erforderliche Temperatur gebracht bzw. im Verbrennungsbetrieb einer Brennkraftmaschine zuverlässig auf einer hohen Temperatur gehalten.

Das den zweiten Volumenbereich 28 durchströmende Abgas tritt im Bereich der Durchtrittsöffnungen 76 dann in den im Abgasstrom-Zusammenführelement 74 gebildeten Strömungsweg-Zusammenführbereich 78 ein und verlässt diesen bzw. die Abgasbehandlungsanordnung 12 über den Abgasauslass 34.

Obgleich in dem vorangehend beschriebenen Betriebszustand bei maximal geöffneter Drosselklappe 38 der zweite Abgasströmungsweg 50 grundsätzlich nicht gegen Durchströmung blockiert ist, wird aufgrund des deutlich geringeren Strömungswiderstands des ersten Abgasströmungswegs 42 das Abgas primär bzw. im Wesentlichen ausschließlich durch den ersten Abgasströmungsweg 42 strömen. Insbesondere der vergleichsweise lange und mehrfach gekrümmte zweite Abgasströmungsweg 50 und das in diesem angeordnete und von dem Abgas zu durchströmende Katalysatorelement 70 der SCR-Katalysatoranordnung 68 sorgen dafür, dass der zweite Abgasströmungsweg 50 einen vergleichsweise großen Strömungswiderstand bereitstellt und somit der Zustand erreicht werden kann, in welchem bei vollständig geöffneter Drosselklappe 38 der Abgasstrom A im Wesentlichen vollständig durch den ersten Abgasströmungsweg 42 hindurch geleitet wird.

Durch die Möglichkeit, zwischen den beiden vorangehend erläuterten Betriebszuständen mit maximal geöffneter Drosselklappe 38 und maximal geschlossener Drosselklappe 38 umschalten zu können, wird die Möglichkeit bereitgestellt, abhängig von der Notwendigkeit, in der SCR-Katalysatoranordnung 68 eine katalytische Reaktion durchzuführen, das Abgas durch diese hindurch zu leiten oder an dieser vorbei zu leiten. Ist beispielsweise bei vergleichsweise hoher Abgastemperatur die Durchführung einer selektiven katalytischen Reduktion nicht erforderlich, kann auf das Einspritzen von Reaktionsmittel R verzichtet werden und der Abgasstrom A kann durch den ersten Abgasströmungsweg 42 geleitet werden, welcher den geringeren Strömungswiderstand bereitstellt, was wiederum im Betrieb einer Brennkraftmaschine zu einem verminderten Brennstoffverbrauch beiträgt.

Ist beispielsweise bei vergleichsweise niedriger Abgastemperatur bzw. hohem Stickoxidanteil im Abgas die Durchführung einer selektiven katalytischen Reduktion erforderlich, kann der Abgasstrom A im Wesentlichen vollständig durch den zweiten Abgasströmungsweg 50 und somit die SCR-Katalysatoranordnung 68 geleitet werden. Dies kann insbesondere dann erforderlich sein, wenn eine Brennkraftmaschine am Beginn des Arbeitsbetriebs Abgas mit vergleichsweise geringerer Temperatur und hohem Schadstoffanteil ausstößt.

Um auch in diesem Zustand eine möglichst schnelle Erwärmung der SCR-Katalysatoranordnung 68 zu erreichen, kann zunächst der oder zumindest ein Teil des Abgasstroms A durch den ersten Abgasströmungsweg 42 geleitet werden, um einen Teil der darin transportierten Wärme auf die im zweiten Volumenbereich 28 von Abgas umströmte SCR-Katalysatoranordnung 68 zu übertragen. Auch in dieser Phase kann beispielsweise bereits ein Teil des Abgasstroms A durch die SCR-Katalysatoranordnung 68 geleitet werden, um diese auch von innen her zu erwärmen. Dabei kann beispielsweise der Anteil des durch den zweiten Abgasströmungsweg 50 geleiteten Abgasstroms A allmählich vergrößert werden, und bei Erreichen einer ausreichend hohen Temperatur der SCR-Katalysatoranordnung kann mit dem Einspritzen von Reaktionsmittel R begonnen werden, um dann die selektive katalytische Reduktion zu starten.

Mit der erfindungsgemäß aufgebauten Abgasbehandlungsanordnung wird ein kompakt aufgebauter Systembereich einer Abgasanlage bereitgestellt, welcher mit einem weiteren der Abgasbehandlung zur Verminderung des Schadstoffanteils dienenden Systembereich kombiniert werden kann, um betriebszustandsabhängig eine SCR-Katalysatoranordnung nur dann zu betreiben, wenn dies zur Verringerung des Stickoxidanteils tatsächlich erforderlich bzw. sinnvoll ist. In anderen Betriebszuständen kann die SCR-Katalysatoranordnung umgangen werden, so dass einerseits für die Durchführung der selektiven katalytischen Reduktion erforderliches Reaktionsmittel eingespart werden kann, andererseits aufgrund des geringeren Strömungswiderstands in diesem Betriebszustand eine Brennkraftmaschine mit geringerem Brennstoffverbrauch und somit auch geringerem Schadstoffausstoß betrieben werden kann.

## Patentansprüche

1. Abgasbehandlungsanordnung für eine Abgasanlage einer Brennkraftmaschine, umfassend:
- einen von einem an einem Gehäuse (14) vorgesehenen Abgaseinlass (32) zu einem an dem Gehäuse (14) vorgesehenen Abgasauslass (34) führenden ersten Abgasströmungsweg (42),
- einen von dem Abgaseinlass (32) zu dem Abgasauslass (34) führenden, vom ersten Abgasströmungsweg (42) getrennten zweiten Abgasströmungsweg (50),
- eine Strömungsweg-Umschalteinheit (36) zum Verändern von in den ersten Abgasströmungsweg (42) und den zweiten Abgasströmungsweg (50) geleiteten Abgasstromanteilen eines den Abgaseinlass (32) durchströmenden Abgasstroms (A),
wobei eine Reaktionsmittelabgabeanordnung (56) zum Abgeben von Reaktionsmittel (R) in den zweiten Abgasströmungsweg (50) stromabwärts des Abgaseinlasses (32) vorgesehen ist und im zweiten Abgasströmungsweg (50) stromaufwärts des Abgasauslasses (34) eine SCR-Katalysatoranordnung (68) vorgesehen ist, **dadurch gekennzeichnet, dass** ein Gehäuseinnenraum durch eine Trennwand (30) in einen ersten Volumenbereich (26) und einen zweiten Volumenbereich (28) unterteilt ist, und dass der zweite Volumenbereich (28) wenigstens einen Teil des ersten Abgasströmungswegs (42) bildet.

2. Abgasbehandlungsanordnung nach Anspruch 1, **dadurch gekennzeichnet, dass** in einem Strömungsweg-Zusammenführbereich (78) stromaufwärts des Abgasauslasses (34) der erste Abgasströmungsweg (42) und der zweite Abgasströmungsweg (50) zusammengeführt sind, und dass die SCR-Katalysatoranordnung (68) im zweiten Abgasströmungsweg (50) stromaufwärts des Strömungsweg-Zusammenführbereichs (78) angeordnet ist.

3. Abgasbehandlungsanordnung nach Anspruch 1 oder 2, **dadurch gekennzeichnet, dass** in einem Strömungsweg-Trennbereich (48) stromabwärts des Abgaseinlasses (32) der erste Abgasströmungsweg (42) und der zweite Abgasströmungsweg (50) voneinander aufgetrennt sind, und dass die Strömungsweg-Umschalteinheit (36) stromabwärts des Strömungsweg-Trennbereichs (48) im ersten Abgasströmungsweg (42) angeordnet ist.

4. Abgasbehandlungsanordnung nach einem der vorangehenden Ansprüche, **dadurch gekennzeichnet, dass** die Strömungsweg-Umschalteinheit (36) eine Drosselklappe (38) umfasst, wobei die Drosselklappe (38) in einer Schließstellung den ersten Abgasströmungsweg (42) gegen Durchströmung maximal, vorzugsweise im Wesentlichen vollständig, absperrt und in einer Offenstellung den ersten Abgasströmungsweg (42) zur Durchströmung maximal freigibt.

5. Abgasbehandlungsanordnung nach einem der vorangehenden Ansprüche, **dadurch gekennzeichnet, dass** ein Strömungswiderstand des ersten Abgasströmungswegs (42) kleiner ist als ein Strömungswiderstand des zweiten Abgasströmungswegs (50).

6. Abgasbehandlungsanordnung nach einem der vorangehenden Ansprüche **dadurch gekennzeichnet, dass** die SCR-Katalysatoranordnung (68) im Wesentlichen im zweiten Volumenbereich (28) angeordnet ist.

7. Abgasbehandlungsanordnung nach einem der vorangehenden Ansprüche, **dadurch gekennzeichnet, dass** der erste Abgasströmungsweg (42) ein zu dem zweiten Volumenbereich (28) offenes, vorzugsweise rohrartiges erstes Abgasführungselement (40) umfasst, oder/und dass ein von dem Abgaseinlass (32) zu dem zweiten Volumenbereich (28) führender Abschnitt des ersten Abgasströmungswegs (42) von Abgas im Wesentlichen geradlinig durchströmbar ist.

8. Abgasbehandlungsanordnung nach Anspruch 7, sofern auf Anspruch 4 rückbezogen, **dadurch gekennzeichnet, dass** die Drosselklappe (38) in dem ersten Abgasführungselement (40) angeordnet ist.

9. Abgasbehandlungsanordnung nach einem der vorangehenden Ansprüche, **dadurch gekennzeichnet, dass** der zweite Abgasströmungsweg (50) umfasst:
- ein im Wesentlichen in dem ersten Volumenbereich (26) angeordnetes, vorzugsweise gehäuseartiges zweites Abgasführungselement (44),
- eine an das zweite Abgasführungselement (44) anschließende Abgas/Reaktionsmittel-Mischstrecke mit einem im Wesentlichen in einem an das zweite Abgasführungselement (44) anschließenden, vorzugsweise rohrartigen dritten Abgasführungselement (54) angeordneten Mischer (60),
- ein an das dritte Abgasführungselement (54) anschließendes, sich im Wesentlichen in dem zweiten Volumenbereich (28) erstreckendes, vorzugsweise rohrartiges viertes Abgasführungselement (62),
- ein an das vierte Abgasführungselement (62) anschließendes, sich im Wesentlichen in dem ersten Volumenbereich (26) erstreckendes, vorzugsweise gehäuseartiges fünftes Abgasführungselement (64),
- ein an das fünfte Abgasführungselement (64) anschließendes, sich im Wesentlichen in dem zweiten Volumenbereich (28) erstreckendes, vorzugsweise rohrartiges, ein Katalysatorelement (70) der SCR-Katalysatoranordnung (68) aufnehmendes sechstes Abgasführungselement (66).

10. Abgasbehandlungsanordnung nach Anspruch 9, **dadurch gekennzeichnet, dass** der Abgaseinlass (32) an dem zweiten Abgasführungselement (44) vorgesehen ist, oder/und dass das zweite Abgasführungselement (44) in einem mit dem dritten Abgasführungselement (54) verbundenen Verbindungsbereich an der Trennwand (30) getragen ist, oder/und dass das dritte Abgasführungselement (54) sich im Wesentlichen in dem zweiten Volumenbereich (28) erstreckt, oder/und dass eine Abgas-Hauptströmungsrichtung in dem zweiten Abgasführungselement (44) im Wesentlichen orthogonal zu einer Abgas-Hauptströmungsrichtung im Abgaseinlass (32) ist.

11. Abgasbehandlungsanordnung nach Anspruch 9 oder 10, **dadurch gekennzeichnet, dass** der zweite Abgasströmungsweg (50) zu dem ersten Volumenbereich (26) nicht offen ist, oder/und dass das zweite Abgasführungselement (44) und das fünfte Abgasführungselement (64) im ersten Volumenbereich (26) nebeneinander angeordnet sind und eine Abgas-Hauptströmungsrichtung im zweiten Abgasführungselement (44) näherungsweise parallel ist zu einer Abgas-Hauptströmungsrichtung im fünften Abgasführungselement (64).

12. Abgasbehandlungsanordnung nach einem der Ansprüche 9-11, **dadurch gekennzeichnet, dass** der erste Abgasströmungsweg (42) ein an das zweite Abgasführungselement (44) anschließendes und zu dem ersten Abgasführungselement (40) führendes, vorzugsweise trichterartiges siebtes Abgasführungselement (86) umfasst.

13. Abgasbehandlungsanordnung nach Anspruch 12, **dadurch gekennzeichnet, dass** das zweite Abgasführungselement (44) eine erste Austrittsöffnung (52) aufweist, wobei das dritte Abgasführungselement (54) an das zweite Abgasführungselement (44) im Bereich der ersten Austrittsöffnung (52) anschließt, und dass das zweite Abgasführungselement (44) eine zweite Austrittsöffnung (84) aufweist, wobei das siebente Abgasführungselement (86) an das zweite Abgasführungselement (44) im Bereich der zweiten Austrittsöffnung (86) anschließt.

14. Abgasbehandlungsanordnung nach einem der Ansprüche 9-13, sofern auf Anspruch 2 rückbezogen, **dadurch gekennzeichnet, dass** der Strömungsweg-Zusammenführbereich (78) ein auf das sechste Abgasführungselement (66) folgendes Abgasstrom-Zusammenführelement (74) umfasst, und dass das Abgasstrom-Zusammenführelement (74) über wenigstens eine, vorzugsweise eine Mehrzahl von Durchtrittsöffnungen (76) zu dem zweiten Volumenbereich (28) offen ist oder/und der Abgasauslass (34) im Bereich des Abgasstrom-Zusammenführelements (74) vorgesehen ist.

15. Abgasanlage für eine Brennkraftmaschine in einem Fahrzeug, umfassend eine Abgasbehandlungsanordnung (12) nach einem der vorangehenden Ansprüche und ein an den Abgasauslass (34) der Abgasbehandlungsanordnung (12) anschließendes Abgasbehandlungssystem (80) mit wenigstens einer Abgasbehandlungseinheit (82).

## Claims

1. An exhaust gas treatment arrangement for an exhaust gas system of an internal combustion engine, comprising:
- a first exhaust gas flow path (42) leading from an exhaust gas inlet (32) provided on a housing (14) to an exhaust gas outlet (34) provided on the housing (14),
- a second exhaust gas flow path (50) leading from the exhaust gas inlet (32) to the exhaust gas outlet (34) and separate from the first exhaust gas flow path (42),
- a flow path switching unit (36) for changing the exhaust gas stream parts, which are conducted in the first exhaust gas flow path (42) and the second exhaust gas flow path (50), of an exhaust gas stream (A) flowing through the exhaust gas inlet (32),
wherein a reactant supply device (56) is provided for supplying reactant (R) into the second exhaust gas flow path (50) downstream of the exhaust gas inlet (32), and an SCR catalyst arrangement (68) is provided in the second exhaust gas flow path (50) upstream of the exhaust gas outlet (34), **characterized in that** a housing interior is divided by a partition wall (30) into a first volume region (26) and **in that** a second volume region (28), and the second volume region (28) forms at least a part of the first exhaust gas flow path (42).

2. The exhaust gas treatment arrangement as claimed in claim 1, **characterized in that** the first exhaust gas flow path (42) and the second exhaust gas flow path (50) merge in a flow path merging region (78) upstream of the exhaust gas outlet (34), and the SCR catalyst arrangement (68) is arranged in the second exhaust gas flow path (50) upstream of the flow path merging region (78).

3. The exhaust gas treatment arrangement as claimed in claim 1 or 2, **characterized in that** the first exhaust gas flow path (42) and the second exhaust gas flow path (50) are separated from one another in a flow path separating region (48) downstream of the exhaust gas inlet (32), and the flow path switching unit (36) is arranged downstream of the flow path separating region (48) in the first exhaust gas flow path (42).

4. The exhaust gas treatment arrangement as claimed in any of the preceding claims, **characterized in that** the flow path switching unit (36) comprises a throttle valve (38), wherein the throttle valve (38) in a closed position blocks the first exhaust gas flow path (42) maximally, preferably substantially completely, against through-flow and in an open position opens the first exhaust gas flow path (42) maximally for through-flow.

5. The exhaust gas treatment arrangement as claimed in any of the preceding claims, **characterized in that** a flow resistance of the first exhaust gas flow path (42) is lower than a flow resistance of the second exhaust gas flow path (50).

6. The exhaust gas treatment arrangement as claimed in one of the preceding claims, **characterized in that** the SCR catalyst arrangement (68) is substantially arranged in the second volume region (28).

7. The exhaust gas treatment arrangement as claimed in one of the preceding claims, **characterized in that** the first exhaust gas flow path (42) comprises a preferably tubular first exhaust gas guide element (40) which is open towards the second volume region (28), and/or exhaust gas can flow substantially rectilinearly through a portion of the first exhaust gas flow path (42) leading from the exhaust gas inlet (32) to the second volume region (28).

8. The exhaust gas treatment arrangement as claimed in claim 7, if referring back to claim 4, **characterized in that** the throttle valve (38) is arranged in the first exhaust gas guide element (40).

9. The exhaust gas treatment arrangement as claimed in one of the preceding claims, **characterized in that** the second exhaust gas flow path (50) comprises:
- a preferably housing-like second exhaust gas guide element (44) substantially arranged in the first volume region (26),
- an exhaust gas/reactant mixing line adjoining the second exhaust gas guide element (44) and having a mixer (60) which is arranged substantially in a preferably tubular third exhaust gas guide element (54) adjoining the second exhaust gas guide element (44),
- a preferably tubular fourth exhaust gas guide element (62) adjoining the third exhaust gas guide element (54) and extending substantially in the second volume region (28),
- a preferably housing-like fifth exhaust gas guide element (64) adjoining the fourth exhaust gas guide element (62) and extending substantially in the first volume region (26),
- a preferably tubular sixth exhaust gas guide element (66) adjoining the fifth exhaust gas guide element (64), extending substantially in the second volume region (28) and containing a catalyst element (70) of the SCR catalyst arrangement (68).

10. The exhaust gas treatment arrangement as claimed in claim 9, **characterized in that** the exhaust gas inlet (32) is provided on the second exhaust gas guide element (44), and/or the second exhaust gas guide element (44) is carried on the partition wall (30) in a connecting region connected to the third exhaust gas guide element (54), and/or the third exhaust gas guide element (54) extends substantially in the second volume region (28), and/or a main exhaust gas flow direction in the second exhaust gas guide element (44) is substantially orthogonal to a main exhaust gas flow direction in the exhaust gas inlet (32).

11. The exhaust gas treatment arrangement as claimed in claim 9 or 10, **characterized in that** the second exhaust gas flow path (50) is not open to the first volume region (26), and/or the second exhaust gas guide element (44) and the fifth exhaust gas guide element (64) are arranged next to one another in the first volume region (26), and a main exhaust gas flow direction in the second exhaust gas guide element (44) is approximately parallel to a main exhaust gas flow direction in the fifth exhaust gas guide element (64).

12. The exhaust gas treatment arrangement as claimed in any of claims 9 - 11, **characterized in that** the first exhaust gas flow path (42) comprises a preferably hopper-like seventh exhaust gas guide element (86) adjoining the second exhaust gas guide element (44) and leading to the first exhaust gas guide element (40).

13. The exhaust gas treatment arrangement as claimed in claim 12, **characterized in that** the second exhaust gas guide element (44) has a first outlet opening (52), wherein the third exhaust gas guide element (54) adjoins the second exhaust gas guide element (44) in the region of the first outlet opening (52), and the second exhaust gas guide element (44) has a second outlet opening (84), wherein the seventh exhaust gas guide element (86) adjoins the second exhaust gas guide element (44) in the region of the second outlet opening (86).

14. The exhaust gas treatment arrangement as claimed in any of claims 9 - 13 insofar as relating back to claim 2, **characterized in that** the flow path merging region (78) comprises an exhaust gas stream merging element (74) following the sixth exhaust gas guide element (66), and the exhaust gas stream merging element (74) is open to the second volume region (28) via at least one, preferably a plurality of passage openings (76), and/or the exhaust gas outlet (34) is provided in the region of the exhaust gas stream merging element (74).

15. An exhaust gas system for an internal combustion engine in a vehicle, comprising an exhaust gas treatment arrangement (12) as claimed in any of the preceding claims, and an exhaust gas treatment system (80) adjoining the exhaust gas outlet (34) of the exhaust gas treatment arrangement (12) and having at least one exhaust gas treatment unit (82).

## Revendications

1. Un dispositif de traitement de gaz d'échappement pour un système de gaz d'échappement d'un moteur à combustion interne, comprenant :
- une première voie d'écoulement de gaz d'échappement (42) menant d'une entrée de gaz d'échappement (32) située sur un boîtier (14) à une sortie de gaz d'échappement (34) située sur le boîtier (14),
- une deuxième voie d'écoulement de gaz d'échappement (50) menant de l'entrée de gaz d'échappement (32) à la sortie de gaz d'échappement (34) et séparée de la première voie d'écoulement de gaz d'échappement (42),
- une unité de commutation de la voie d'écoulement (36) pour changer les parties d'écoulement de gaz d'échappement, qui sont conduites dans la première voie d'écoulement de gaz d'échappement (42) et la deuxième voie d'écoulement de gaz d'échappement (50), d'un flux de gaz d'échappement (A) s'écoulant à travers l'entrée de gaz d'échappement (32),
dans lequel un dispositif d'alimentation en réactif (56) est prévu pour fournir un réactif (R) dans la deuxième voie d'écoulement de gaz d'échappement (50) en aval de l'entrée de gaz d'échappement (32), et un dispositif de catalyseur SCR (68) est prévu dans la deuxième voie d'écoulement de gaz d'échappement (50) en amont de la sortie de gaz d'échappement (34), **caractérisé en ce qu'**un intérieur de boîtier est divisé par une paroi de séparation (30) en une première région de volume (26) et en une deuxième région de volume (28), et **en ce que** la deuxième région de volume (28) forme au moins une partie de la première voie d'écoulement de gaz d'échappement (42).

2. Le dispositif de traitement de gaz d'échappement selon la revendication 1, **caractérisé en ce que** la première voie d'écoulement de gaz d'échappement (42) et la deuxième voie d'écoulement de gaz d'échappement (50) se rejoignent dans une région de jonction des voies d'écoulement (78) en amont de la sortie de gaz d'échappement (34), et **en ce que** le dispositif de catalyseur SCR (68) est disposé dans la deuxième voie d'écoulement de gaz d'échappement (50) en amont de la région de jonction des voies d'écoulement (78).

3. Le dispositif de traitement de gaz d'échappement selon la revendication 1 ou 2, **caractérisé en ce que** la première voie d'écoulement de gaz d'échappement (42) et la deuxième voie d'écoulement de gaz d'échappement (50) sont séparées l'une de l'autre dans une région de séparation des voies d'écoulement (48) en aval de l'entrée de gaz d'échappement (32), et **en ce que** l'unité de commutation des voies d'écoulement (36) est disposée en aval de la région de séparation des voies d'écoulement (48) dans la première voie d'écoulement de gaz d'échappement (42).

4. Le dispositif de traitement de gaz d'échappement selon l'une des revendications précédentes, **caractérisé en ce que** l'unité de commutation de la voie d'écoulement (36) comprend un papillon de gaz (38), dans lequel le papillon de gaz (38) dans une position fermée bloque la première voie d'écoulement de gaz d'échappement (42) au maximum, de préférence sensiblement complètement, contre l'écoulement et en position ouverte ouvre la première voie d'écoulement de gaz d'échappement (42) au maximum pour l'écoulement.

5. Le dispositif de traitement de gaz d'échappement selon l'une des revendications précédentes, **caractérisé en ce qu'**une résistance 'écoulement de la première voie d'écoulement de gaz d'échappement (42) est inférieure à une résistance d'écoulement de la deuxième voie d'écoulement de gaz d'échappement (50).

6. Le dispositif de traitement de gaz d'échappement selon l'une des revendications précédentes, **caractérisé en ce que** le catalyseur SCR (68) est essentiellement disposé dans la deuxième région de volume (28).

7. Le dispositif de traitement de gaz d'échappement selon l'une des revendications précédentes, **caractérisé en ce que** la première voie d'écoulement de gaz d'échappement (42) comprend un premier élément de guidage de gaz d'échappement (40), de préférence tubulaire, qui est ouvert vers la deuxième région de volume (28), et/ou les gaz d'échappement peuvent s'écouler de manière sensiblement rectiligne à travers une partie de la première voie d'écoulement de gaz d'échappement (42) menant de l'entrée de gaz d'échappement (32) à la deuxième région de volume (28).

8. Le dispositif de traitement de gaz d'échappement selon la revendication 7, dans la mesure où elle se rapporte à la revendication 4, **caractérisé en ce que** le papillon de gaz (38) est disposé dans le premier élément de guidage de gaz d'échappement (40).

9. Le dispositif de traitement de gaz d'échappement selon l'une des revendications précédentes, **caractérisé en ce que** la deuxième voie d'écoulement de gaz d'échappement (50) comprend :
- un deuxième élément de guidage de gaz d'échappement (44), de préférence en forme de boîtier, sensiblement disposé dans la première région de volume (26),
- une ligne de mélange gaz d'échappement/réactif adjacente au deuxième élément de guidage de gaz d'échappement (44) et comportant un mélangeur (60) disposé essentiellement dans un troisième élément de guidage de gaz d'échappement (54), de préférence tubulaire, adjacent au deuxième élément de guidage de gaz d'échappement (44),
- un quatrième élément de guidage de gaz d'échappement (62), de préférence tubulaire, adjacent au troisième élément de guidage de gaz d'échappement (54) et s'étendant sensiblement dans la deuxième région de volume (28),
- un cinquième élément de guidage de gaz d'échappement (64), de préférence en forme de boîtier, adjacent au quatrième élément de guidage de gaz d'échappement (62) et s'étendant sensiblement dans la première région de volume (26),
- un sixième élément de guidage de gaz d'échappement (66), de préférence tubulaire, adjacent au cinquième élément de guidage de gaz d'échappement (64), s'étendant sensiblement dans la deuxième région de volume (28) et contenant un élément catalytique (70) du dispositif catalytique SCR (68).

10. Le dispositif de traitement de gaz d'échappement selon la revendication 9, **caractérisé en ce que** l'entrée de gaz d'échappement (32) est prévue sur le deuxième élément de guidage de gaz d'échappement (44), et/ou **en ce que** le deuxième élément de guidage de gaz d'échappement (44) est porté sur la paroi de séparation (30) dans une région de connexion reliée au troisième élément de guidage de gaz d'échappement (54), et/ou le troisième élément de guidage de gaz d'échappement (54) s'étend sensiblement dans la deuxième région de volume (28), et/ou une direction principale d'écoulement de gaz d'échappement dans le deuxième élément de guidage de gaz d'échappement (44) est sensiblement orthogonale à une direction principale d'écoulement de gaz d'échappement dans l'entrée de gaz d'échappement (32).

11. Le dispositif de traitement de gaz d'échappement selon la revendication 9 ou 10, **caractérisé en ce que** la deuxième voie d'écoulement de gaz d'échappement (50) n'est pas ouverte sur la première région de volume (26), et/ou le deuxième élément de guidage de gaz d'échappement (44) et **en ce que** le cinquième élément de guidage de gaz d'échappement (64) sont disposés l'un à côté de l'autre dans la première région de volume (26), et une direction principale d'écoulement de gaz d'échappement dans le deuxième élément de guidage de gaz d'échappement (44) est approximativement parallèle à une direction principale d'écoulement de gaz d'échappement dans le cinquième élément de guidage de gaz d'échappement (64).

12. Le dispositif de traitement de gaz d'échappement selon l'une des revendications 9 à 11, **caractérisé en ce que** la première voie d'écoulement de gaz d'échappement (42) comprend un septième élément de guidage de gaz d'échappement (86), de préférence en forme d'entonnoir, adjacent au deuxième élément de guidage de gaz d'échappement (44) et menant au premier élément de guidage de gaz d'échappement (40).

13. Le dispositif de traitement de gaz d'échappement selon la revendication 12, **caractérisé en ce que** le deuxième élément de guidage de gaz d'échappement (44) a une première ouverture de sortie (52), dans lequel le troisième élément de guidage de gaz d'échappement (54) est adjacent au deuxième élément de guidage de gaz d'échappement (44) dans la région de la première ouverture de sortie (52), et le deuxième élément de guidage de gaz d'échappement (44) a une deuxième ouverture de sortie (84), dans lequel le septième élément de guidage de gaz d'échappement (86) est adjacent au deuxième élément de guidage de gaz d'échappement (44) dans la région de la deuxième ouverture de sortie (86).

14. Le dispositif de traitement de gaz d'échappement selon l'une des revendications 9 à 13 dans la mesure où elle se rapporte à la revendication 2, **caractérisé en ce que** la région de jonction des voies d'écoulement (78) comprend un élément de jonction d'écoulement de gaz d'échappement (74) qui suit le sixième élément de guidage de gaz d'échappement (66), et l'élément de jonction d'écoulement de gaz d'échappement (74) est ouvert à la deuxième région de volume (28) par au moins une, de préférence une pluralité d'ouvertures de passage (76), et/ou la sortie de gaz d'échappement (34) est prévue dans la région de l'élément de jonction d'écoulement de gaz d'échappement (74).

15. Un système de gaz d'échappement pour un moteur à combustion interne dans un véhicule, comprenant un dispositif de traitement de gaz d'échappement (12) selon l'une des revendications précédentes, et un système de traitement de gaz d'échappement (80) adjacent à la sortie de gaz d'échappement (34) du dispositif de traitement de gaz d'échappement (12) et comportant au moins une unité de traitement de gaz d'échappement (82).
